# FASCICULE DE BREVET EUROPEEN

(11) **EP 3 119 621 B1**
(45) Date de publication et mention de la délivrance du brevet: **17.06.2020**
(21) Numéro de dépôt: 15709228.9
(22) Date de dépôt: 09.02.2015
(51) Int. Cl.: B60G 7/02, B60G 9/02

(54) **STRUCTURE ARRIERE DE VEHICULE AUTOMOBILE**
RÜCKSTRUKTUR FÜR EIN KRAFTFAHRZEUG
REAR STRUCTURE OF A MOTOR VEHICLE

(30) Priorité: 18.03.2014 FR 1452226
(43) Date de publication de la demande: 25.01.2017
(73) Titulaire: Renault s.a.s., 92100 Boulogne-Billancourt (FR)
(72) Inventeur: HLUBINA, Thierry, F-92370 Chaville (FR); RIOULT, Olivier, F-78960 Voisins Le Bretonneux (FR); CAILLARD, Jerome, F-91190 Gif Sur Yvette (FR)
(86) Numéro de dépôt international: PCT/FR2015/050299
(87) Numéro de publication internationale: WO 2015/140427

(56) Documents cités:
- EP-A1- 0 560 242
- WO-A1-98/17487
- DE-A1-102009 041 702
- DE-C- 838 112
- FR-A1- 2 747 616
- GB-A- 2 056 382
- JP-A- H08 332 854
- US-A- 3 785 672
- US-A- 5 967 668

## Description

L'invention concerne une structure arrière de véhicule automobile, comprenant un composant de train avec fixation centrale.

On connaît des véhicules pourvus d'une structure arrière comprenant un composant de train avec une fixation centrale, par exemple un train de Dion, montée en pivotement autour d'un axe y, cet axe étant horizontal et perpendiculaire au sens de déplacement dans le référentiel du véhicule. Un palier peut ainsi permettre d'assurer la rotation en y du composant de train, afin de compenser les éventuels défauts de planéité du sol et/ou d'absorber les contraintes induites lors du choc frontal.

Un composant de train avec fixation centrale peut permettre une conception de véhicule plus compacte qu'un composant de train en H.

Le composant de train est monté en pivotement sur un berceau de fixation du moteur, ce berceau étant lui-même fixé aux composants de soubassement du véhicule automobile, par quatre fixations principales.

On connaît via le document FR 2 747 616 A1 une structure arrière de véhicule automobile comprenant un train arrière pourvu d'une partie centrale articulée en son milieu sur le soubassement du véhicule et de deux parties latérales définissant avec la partie centrale un espace recevant un groupe motopropulseur.

Il existe un besoin pour un véhicule plus écologique, en optimisant la masse globale de ce véhicule.

Il est proposé une structure arrière de véhicule automobile comprenant :
- un composant de soubassement pour soutenir un plancher de véhicule automobile,
- un composant de train comprenant une partie centrale et, de part et d'autre de la partie centrale, deux parties latérales définissant avec la partie centrale un espace pour recevoir un organe du véhicule, par exemple un moteur,
- un organe de pivotement comprenant un premier élément de pivotement et un deuxième élément de pivotement aptes à pivoter l'un par rapport à l'autre, le premier élément de pivotement étant directement fixé ou intégré à la partie centrale du composant de train, le deuxième élément de pivotement étant directement fixé ou intégré au composant de soubassement.

La structure arrière est agencée de sorte que le premier et le deuxième éléments de pivotement pivotent l'un par rapport à l'autre autour d'un axe sensiblement horizontal et sensiblement perpendiculaire au sens de déplacement du véhicule dans le référentiel du véhicule automobile, lorsque le premier et le deuxième éléments de pivotement sont ainsi fixés à la partie centrale du composant de train et au composant de soubassement, respectivement, du véhicule automobile.

Dit autrement, le composant de train est à fixation centrale et est monté en rotation directement sur le composant de soubassement.

Ainsi, cette structure est dénuée de berceau entre le composant de train et le composant de soubassement. Cette structure peut donc être plus légère que dans l'art antérieur, de sorte que la consommation en carburant ou en électricité du véhicule automobile peut être moindre.

Le premier élément de pivotement peut comprendre un arbre, et le deuxième élément de pivotement peut comprendre un palier coopérant avec cet arbre. Inversement, le premier élément de pivotement peut comprendre un palier, et le deuxième élément de pivotement peut comprendre un arbre coopérant avec ce palier.

Le palier peut par exemple comprendre un coussinet, de forme tubulaire avec ou sans collerette.

On peut aussi prévoir un guidage en rotation par des roulements. L'organe de pivotement peut par exemple comprendre un rouleau à billes.

Avantageusement et de façon non limitative, le composant de soubassement peut comprendre une partie de soubassement et deux flasques solidarisés à la partie de soubassement.

Le deuxième élément de pivotement peut être fixé à ces flasques.

Le deuxième élément de pivotement peut par exemple comprendre une tige fixée aux flasques, par exemple une tige insérée dans deux évidements respectifs des flasques, et maintenue par exemple au moyen d'un écrou.

Le deuxième élément de pivotement peut alternativement comprendre par exemple une bague fixée aux flasques.

Le premier élément de pivotement peut avantageusement comprendre une bague montée autour de la tige, et solidarisée ou d'une seule pièce avec le composant de train.

Avantageusement et de façon non limitative, le premier élément de pivotement peut par exemple comprendre une bague additionnelle montée autour de la partie centrale du composant de train, et d'une seule pièce avec la bague montée autour de la tige.

Avantageusement et de façon non limitative, la partie centrale et les deux parties latérales du composant de train peuvent définir un espace dimensionné pour recevoir un moteur arrière, par exemple un moteur de propulsion du véhicule automobile. Dit autrement, le véhicule automobile peut comprendre un moteur arrière, reçu dans l'espace défini par le composant de train à fixation centrale.

Avantageusement et de façon non limitative, le composant de soubassement peut être agencé pour supporter en outre des efforts issus du moteur de propulsion.

Avantageusement et de façon non limitative, la structure arrière du véhicule automobile peut comprendre un organe de pivotement additionnel comprenant des éléments de pivotement additionnels, l'un de ces éléments de pivotement étant fixé directement sur, ou intégré au composant de soubassement, et l'autre de ces éléments de pivotement coopérant, directement ou indirectement, avec le moteur.

Par exemple, l'autre des éléments de pivotement peut être fixé ou intégré à un moyen de reprise de couple moteur, par exemple une biellette de reprise de couple du moteur.

Dans l'art antérieur, le berceau permet d'absorber les efforts lors du fonctionnement du moteur, du roulage ou véhicule ou d'un choc. Ainsi, le composant de soubassement est-il conçu pour assurer une autre des fonctionnalités assurée dans l'art antérieur par le berceau, à savoir la reprise de couple du moteur.

Par exemple, une (ou plusieurs) tige(s) additionnel(les) peut (ou peuvent) être fixée(s) aux flasques du composant de soubassement et des bagues montées autour de ces tiges peuvent être solidarisées à la biellette de reprise de couple du moteur.

Dans un mode de réalisation avantageux, les flasques peuvent être conformées pour pouvoir être obtenus par un emboutissage.

Les flasques peuvent effectivement être obtenues par emboutissage. Le composant de soubassement reste ainsi relativement facile à produire, même s'il assure un certain nombre de fonctions nouvelles, à savoir la rotation en y et l'absorption des efforts de reprise de couple.

Avantageusement et de façon non limitative, les flasques peuvent définir une surface de contact avec la partie soubassement du composant de soubassement, cette surface de contact étant suffisamment étendue pour que les flasques puissent être soudés à la partie soubassement, et ce, de façon suffisamment robuste pour absorber les efforts issus du composant de train pour un fonctionnement attendu du véhicule.

Avantageusement et de façon non limitative, les flasques peuvent définir des rebords, de par exemple 1 cm d'épaisseur. Un tel bord tombé peut permettre de rigidifier la périphérie des flasques.

Il est en outre proposé un véhicule automobile comprenant une structure arrière telle que décrite ci-dessus.

Le véhicule peut avantageusement comprendre un moteur de propulsion arrière, reçu dans l'espace défini par le composant de train.

L'invention sera mieux comprise en référence aux figures, lesquelles illustrent des modes de réalisation donnés à titre d'exemple et non limitatifs.
La figure 1 est une vue en perspective d'une partie arrière d'un véhicule automobile selon un mode de réalisation de l'invention, toutes les pièces n'étant pas représentées.
La figure 2 est une vue en perspective d'une portion de structure arrière selon le mode de réalisation de la figure 1.

Des références identiques seront utilisées d'une figure à l'autre pour désigner des éléments identiques ou similaires, dans leur forme ou dans leur fonction.

Dans les présente demande les axes x, y, z sont les axes classiquement utilisés dan le domaine de l'automobile, pris dans le référentiel du véhicule automobile, c'est-à-dire que l'axe x est l'axe avant-arrière du véhicule, correspondant à la direction de déplacement lorsque le volant est droit, que l'axe z est colinéaire au vecteur gravité et de sens opposé à ce vecteur gravité lorsque le véhicule est posé sur un sol plat et que l'axe y, ou axe latéral, est perpendiculaire aux axes x et z.

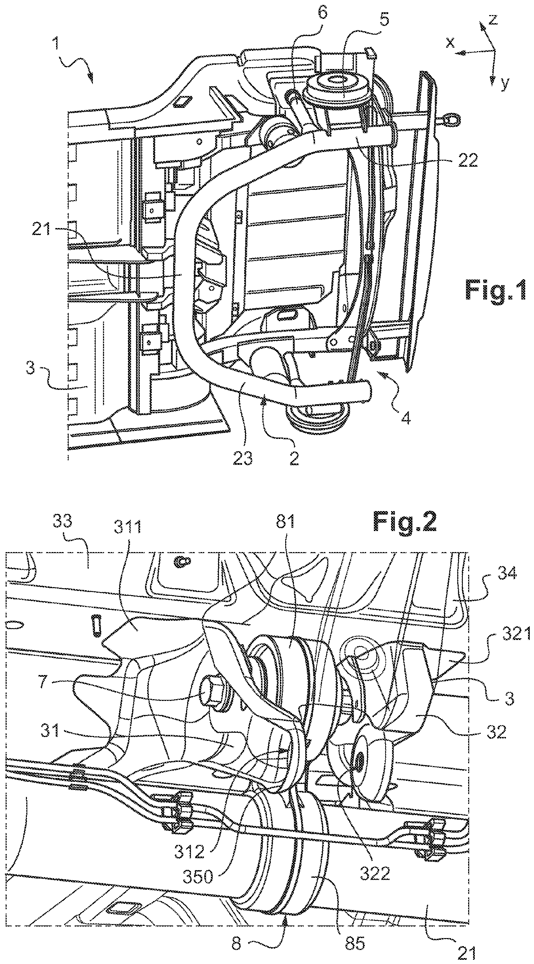

En référence à la figure 1, une structure arrière de véhicule automobile 1 comprend un composant de train à fixation centrale, par exemple un train de Dion 2, et un composant de soubassement 3.

Le train 2 a une forme générale de C et comprend une partie centrale 21 et deux parties latérales 22, 23. Le train de Dion 2 définit un espace 4 pour recevoir un moteur de propulsion (non représenté).

Le train arrière de Dion 2 est avantageux par rapport à un train arrière en H en ce sens que davantage d'espace est libéré dans la partie arrière du véhicule automobile pour pouvoir installer le moteur, permettant ainsi de concevoir des véhicules plus compacts.

La partie arrière du véhicule automobile comprend en outre des essieux 5 et des amortisseurs 6.

Le train de Dion 2 est monté en pivotement directement sur le composant de soubassement 3. La structure arrière comporte à cet effet un organe de pivotement non représenté sur la figure 1, et qui sera décrit en référence à la figure 2.

Plus précisément, en référence à la figure 2, deux flasques 31, 32, sont soudés à une partie soubassement 33 du composant de soubassement 3. Ces flasques 31, 32 définissent deux évidements en regard l'un de l'autre pour recevoir les deux extrémités respectives d'une tige non visible sur la figure 2.

Un système d'écrou 7, comprenant par exemple un écrou M14, permet de bloquer cette tige, ici une vis de fixation, sur les flasques 31, 32.

Cette tige est un élément d'un organe de pivotement 8 comprenant par ailleurs un élément de bague 81, cet élément 81 comprenant une bague montée en rotation autour de la tige. Dit autrement, la tige et la bague 81 forment un système arbre-palier. L'élément de bague comprend en outre une bague additionnelle 85 soudée à la partie centrale 21 du train de Dion 2.

Ainsi, cet organe de pivotement 8 permet un mouvement de pivotement entre le train de Dion 2 et le composant de soubassement 3 autour d'un axe sensiblement parallèle à l'axe y du véhicule.

Cette rotation en y peut permettre de compenser l'absence de planéité du sol et/ou d'absorber les efforts induits lors d'un choc frontal.

Les deux flasques 31, 32 sont emboutis et soudés par des points de soudure à la partie soubassement 33, plus précisément à une traverse de soubassement 34.

Les flasques 31, 32 ont été conçus de façon à définir des surfaces de contact 311, 321, relativement étendues, de sorte que ces flasques 31, 32 puissent être soudés à la traverse 34 de façon relativement robuste.

Les flasques 31, 32 définissent en outre des orifices 312, 322 pour recevoir une tige additionnelle. Cette tige additionnelle fait partie d'un organe de pivotement additionnel couplant le composant de soubassement 3 à une biellette de reprise de couple du moteur non représentée. Cette tige additionnelle n'est pas représentée sur la figure 2.

Lorsque le véhicule automobile est utilisé, les efforts issus de la non planéité de la route sur le train arrière 2 sont transmis au soubassement 3 via l'organe de rotation 8, dit aussi interface de Point A.

Cette interface a donc été dimensionnée de façon à supporter ce type d'effort.

En cas de choc frontal ou arrière, cette interface est susceptible d'être sollicitée. Ainsi, les flasques 31, 32 ont-ils été conçus avec des matériaux et des dimensions adaptés pour supporter en outre des efforts relativement importants. Les flasques 31, 32 peuvent être ainsi être réalisés à partir de tôles d'acier embouties, d'épaisseur de l'ordre de 2,5 mm.

Le nombre de pièces peut ainsi être relativement réduit.

Les flasques 31, 32 définissent des rebords 350, d'environ 1 centimètre d'épaisseur. Ces rebords, ou bords tombés 350, sont obtenus par emboutissage.

Alternativement, plutôt qu'un système vis-écrou, on pourrait envisager de souder les extrémités d'une tige aux flasques 31 32.

## Revendications

1. Structure arrière de véhicule automobile (1) comprenant :
un composant de soubassement (3) pour soutenir un plancher de véhicule automobile,
un composant de train (2) comprenant une partie centrale (21) et, de part et d'autre de la partie centrale, deux parties latérales (22, 23) définissant avec la partie centrale un espace dimensionné pour recevoir un moteur de propulsion du véhicule automobile,
un organe de pivotement (8) comprenant un premier élément de pivotement (81) et un deuxième élément de pivotement aptes à pivoter l'un par rapport à l'autre, le premier élément de pivotement étant directement fixé ou intégré à la partie centrale du composant de train, le deuxième élément de pivotement étant directement fixé ou intégré au composant de soubassement,
dans laquelle
la structure arrière est agencée de sorte que le premier et le deuxième éléments de pivotement pivotent l'un par rapport à l'autre autour d'un axe (y) sensiblement horizontal et sensiblement perpendiculaire au sens de déplacement du véhicule dans le référentiel du véhicule automobile, lorsque le premier et le deuxième élément de pivotement sont ainsi fixés à la partie centrale du composant de train et au composant de soubassement, respectivement, du véhicule automobile, et dans laquelle
le composant de soubassement (3) comporte une partie de soubassement (33) et deux flasques (31, 32) solidarisés à la partie de soubassement, et
le deuxième élément de pivotement est fixé auxdites flasques.
**caractérisé en ce que** le deuxième élément de pivotement comprend une tige fixée aux ou d'une seule pièce avec les flasques (31, 32), et
le premier élément de pivotement comprend une bague (81) montée autour de la tige, et solidarisée ou d'une seule pièce avec le composant de train (2), le premier élément de pivotement comprenant également une bague additionnelle (85) soudée à la partie centrale (21) du composant de train (2), et d'une seule pièce avec la bague (81) montée autour de la tige.

2. Structure arrière (1) selon la revendication 1, dans laquelle
les flasques (31, 32) sont conformés pour pouvoir être obtenus par un emboutissage.

3. Structure arrière (1) selon l'une des revendications 1 ou 2, dans laquelle
les flasques (31, 32) définissent chacune une surface de contact (311, 321) avec la partie soubassement (33) du composant de soubassement (3), cette surface de contact étant suffisamment étendue pour que les flasques puissent être soudés à la partie soubassement, et ce, de façon suffisamment robuste pour absorber les efforts issus du composant de train (2) pour un fonctionnement attendu du véhicule.

4. Structure arrière (1) selon l'une des revendications 1 à 3, dans laquelle
les flasques (31, 32) définissent des rebords (350).

5. Structure arrière (1) selon l'une quelconque des revendications 1 à 4, dans laquelle
la structure arrière du véhicule automobile comporte un organe de pivotement additionnel comprenant des éléments de pivotement additionnels, l'un desdits éléments de pivotement étant fixé ou intégré au composant de soubassement, et l'autre desdits éléments de pivotement étant fixé ou intégré à une biellette de reprise de couple du moteur.

6. Véhicule automobile comprenant une structure arrière (1) selon l'une quelconque des revendications 1 à 5.

## Patentansprüche

1. Heckstruktur eines Kraftfahrzeugs (1), die enthält:
ein Unterbodenbauteil (3), um einen Kraftfahrzeugboden zu stützen,
ein Achsenbauteil (2), das einen Mittelteil (21) und zu beiden Seiten des Mittelteils zwei Seitenteile (22, 23) enthält, die mit dem Mittelteil einen Raum definieren,
der bemessen ist, um einen Antriebsmotor des Kraftfahrzeugs aufzunehmen,
ein Schwenkorgan (8), das ein erstes Schwenkelement (81) und ein zweites Schwenkelement enthält, die zueinander schwenken können, wobei das erste Schwenkelement am Mittelteil des Achsenbauteils direkt befestigt oder in diesen integriert ist, wobei das zweite Schwenkelement am Unterbodenbauteil direkt befestigt oder in dieses integriert ist,
wobei
die Heckstruktur so eingerichtet ist, dass das erste und das zweite Schwenkelement um eine im Wesentlichen waagrechte und im Wesentlichen zur Bewegungsrichtung des Fahrzeugs im Bezugssystem des Kraftfahrzeugs lotrechte Achse (y) zueinander schwenken, wenn das erste und das zweite Schwenkelement so am Mittelteil des Achsenbauteil bzw. am Unterbodenbauteil des Kraftfahrzeugs befestigt sind, und wobei das Unterbodenbauteil (3) einen Unterbodenteil (33) und zwei Flansche (31, 32) aufweist, die fest mit dem Unterbodenteil verbunden sind, und
das zweite Schwenkelement an den Flanschen befestigt ist,
**dadurch gekennzeichnet, dass** das zweite Schwenkelement eine Stange enthält, die an den Flanschen (31, 32) befestigt oder aus einem Stück mit ihnen ist, und
das erste Schwenkelement einen um die Stange montierten Ring (81) enthält, der fest mit dem Achsenbauteil (2) verbunden oder aus einem Stück mit ihm ist, wobei das erste Schwenkelement ebenfalls einen zusätzlichen Ring (85) enthält, der an den Mittelteil (21) des Achsenbauteils (2) geschweißt und aus einem Stück mit dem um die Stange montierten Ring (81) ist.

2. Heckstruktur (1) nach Anspruch 1, wobei die Flansche (31, 32) so gestaltet sind, dass sie durch einen Tiefziehvorgang erhalten werden können.

3. Heckstruktur (1) nach einem der Ansprüche 1 oder 2, wobei die Flansche (31, 32) je eine Kontaktfläche (311, 321) mit dem Unterbodenteil (33) des Unterbodenbauteils (3) definieren, wobei diese Kontaktfläche sich weit genug erstreckt, damit die Flansche an den Unterbodenteil geschweißt werden können, und dies robust genug, um die vom Achsenbauteil (2) stammenden Kräfte bei einem erwarteten Betrieb des Fahrzeugs zu absorbieren.

4. Heckstruktur (1) nach einem der Ansprüche 1 bis 3, wobei die Flansche (31, 32) Randleisten (350) definieren.

5. Heckstruktur (1) nach einem der Ansprüche 1 bis 4, wobei die Heckstruktur des Kraftfahrzeugs ein zusätzliches Schwenkorgan aufweist, das zusätzliche Schwenkelemente enthält, wobei eines der Schwenkelemente am Unterbodenbauteil befestigt oder in dieses integriert ist, und das andere der Schwenkelemente an einer Drehmomentstütze des Motors befestigt oder in diese integriert ist.

6. Kraftfahrzeug, das eine Heckstruktur (1) nach einem der Ansprüche 1 bis 5 enthält.

## Claims

1. Motor vehicle rear structure (1) comprising:
an underframe component (3) for supporting a motor vehicle floor,
an axle component (2) comprising a central part (21) and, on each side of the central part, two lateral parts (22, 23) defining, with the central part, a space sized to accommodate a propulsion engine of the motor vehicle,
a pivot member (8) comprising a first pivot element (81) and a second pivot element which are able to pivot relative to one another, the first pivot element being directly fixed to or integrated into the central part of the axle component and the second pivot element being directly fixed to or integrated into the underframe component,
in which
the rear structure is arranged in such a way that the first and second pivot elements pivot relative to one another about an axis (y) that is substantially horizontal and substantially perpendicular to the direction of travel of the vehicle in the frame of reference of the motor vehicle, when the first and second pivot elements are thus fixed to the central part of the axle component and to the underframe component of the motor vehicle, respectively, and in which the underframe component (3) comprises an underframe part (33) and two flanges (31, 32) secured to the underframe part, and
the second pivot element is fixed to said flanges,
**characterized in that** the second pivot element comprises a rod fixed to or of one piece with the flanges (31, 32), and
the first pivot element comprises a ring (81) mounted around the rod and secured to or of one-piece with the axle component (2), the first pivot element also comprising an additional ring (85) welded to the central part (21) of the axle component (2) and of one-piece with the ring (81) mounted around the rod.

2. Rear structure (1) according to Claim 1, in which the flanges (31, 32) are configured so that they can be obtained by pressing.

3. Rear structure (1) according to one of Claims 1 and 2, in which
the flanges (31, 32) each define a contact surface (311, 321) for contact with the underframe part (33) of the underframe component (3), this contact surface being extensive enough that the flanges can be welded to the underframe part and can be welded robustly enough to absorb loading derived from the axle component (2) in an expected operation of the vehicle.

4. Rear structure (1) according to one of Claims 1 to 3, in which
the flanges (31, 32) define turned-up edges (350).

5. Rear structure (1) according to any one of Claims 1 to 4, in which
the rear structure of the motor vehicle comprises an additional pivot member comprising additional pivot elements, one of the said pivot elements being fixed to or integrated into the underframe component and the other of the said pivot elements being fixed to or integrated into an engine torque reacting link rod.

6. Motor vehicle comprising a rear structure (1) according to any one of Claims 1 to 5.
